# EUROPÄISCHE PATENTSCHRIFT

(11) **EP 2 567 062 B1**
(45) Veröffentlichungstag und Bekanntmachung des Hinweises auf die Patenterteilung: **17.08.2016**
(21) Anmeldenummer: 11743956.2
(22) Anmeldetag: 27.04.2011
(51) Int. Cl.: E21B 43/00, F17D 3/00, F04B 43/00

(54) **SAMMELBEHÄLTER, SYSTEM AUS SAMMELBEHÄLTER UND MULTIPHASENPUMPEN UND VERFAHREN ZUM SEPARIEREN UND AUFTEILEN EINES MULTIPHASENGEMISCHES**
COLLECTING TANK, SYSTEM COMPRISING COLLECTING TANK AND MULTI-PHASE PUMPS, AND METHOD FOR SEPARATING AND DIVIDING UP A MULTI-PHASE MIXTURE
CONTENANT COLLECTEUR, SYSTÈME COMPOSÉ D'UN CONTENANT COLLECTEUR ET D'UNE POMPE MULTIPHASE ET PROCÉDÉ POUR SÉPARER ET DISTRIBUER UN MÉLANGE MULTIPHASE

(30) Priorität: 03.05.2010 DE 102010019238
(43) Veröffentlichungstag der Anmeldung: 13.03.2013
(73) Patentinhaber: ITT Bornemann GmbH, 31683 Obernkirchen (DE)
(72) Erfinder: JÄSCHKE, Axel, 32427 Minden (DE); ROHLFING, Gerhard, 32479 Hille (DE); BRANDT, Jens-Uwe, 31737 Rinteln (DE); BREDEMEIER, Marco (geb. Drewniok), 31712 Niedernwöhren (DE); REICHWAGE, Mark, 31683 Obernkirchen (DE)
(74) Vertreter: Stornebel, Kai
(86) Internationale Anmeldenummer: PCT/DE2011/000457
(87) Internationale Veröffentlichungsnummer: WO 2011/137892

(56) Entgegenhaltungen:
- DE-T2- 69 305 301
- DE-U1- 8 810 901
- GB-A- 2 000 688
- US-A- 5 035 842
- US-A- 5 176 174
- US-A- 5 421 357

## Beschreibung

Die Erfindung betrifft einen Sammelbehälter für Multiphasengemische aus einer Kohlenwasserstoffquelle mit zumindest einem Einlass zum Einleiten von Multiphasengemischen in den Sammelbehälter, ein System aus zumindest einem Sammelbehälter und mehreren daran angeschlossenen Multiphasenpumpen sowie ein Verfahren zum Separieren und Aufteilen eines Multiphasengemisches auf mehrere Multiphasenpumpen.

Bei der Förderung von Multiphasengemischen, insbesondere von Kohlenwasserstoffen, kommt es zu wechselnden Fördersituationen. Kohlenwasserstoffe werden in der Regel in Gemischen gefördert, in denen unterschiedliche Aggregatzustände vorhanden sind. Neben einer Festphase, beispielsweise Sand, sind Flüssigphasen und Gasphasen vorhanden. Diese Phasen sind in unterschiedlichen Anteilen vorhanden, wobei die Zusammensetzung der Multiphasengemische in einem weiten Umfang variiert, so dass nicht vorhergesagt werden kann, wann und wie lange welche Zusammensetzung des Multiphasengemisches gefördert wird. So kann es vorkommen, dass nach einer längeren Zeit der Förderung mit einem überwiegenden Flüssigphasenanteil für einen langen Zeitraum ein Gasphasenanteil gefördert wird, teilweise bis zur ausschließlichen Förderung von Gasphasen. Somit sind sowohl Zeitpunkt als auch Dauer und Verhältnis der Anteile des Multiphasengemisches unbekannt, was die Förderung erschwert.

Der Investitionsaufwand bei der Erschließung von Kohlenwasserstoffquellen ist außerordentlich hoch. Dabei kann es notwendig sein, dass mehrere Förderpumpen vorgesehen sind, beispielsweise wenn die zu fördernden Volumina mit einer Baugröße technisch nicht sinnvoll transportiert werden können, beispielsweise weil die benötigten Baugrößen nicht vorhanden sind oder weil die an den Bedarf angepassten Baugrößen technisch oder wirtschaftlich nicht sinnvoll sind.

Junge Förderfelder entwickeln erst nach einigen Jahren ihre Maximalproduktion, so dass das Problem vorhanden ist, dass zu Beginn der Förderung eine relativ kleine Baugröße ausreichen kann, was jedoch im Verlauf des weiteren Betriebes zu Problemen führen kann, wenn die zu Beginn passende Baugröße nicht mehr ausreicht. Es besteht daher die Möglichkeit, mehrere Pumpeinheiten zu betreiben, die parallel zueinander angeordnet sind, um neben einer gewünschten Redundanz und Ausfallsicherheit eine Variabilität der Förderleistung bereitstellen zu können. Es kann unter logistischen Gesichtspunkten sinnvoll sein, nur eine Baugröße festzulegen und den unterschiedlichen Fördermengenbedarf durch eine unterschiedliche Anzahl paralleler Multiphasenpumpen oder durch eine entsprechende Fördermengenanpassung der einzelnen Multiphasenpumpen zu befriedigen.

Redundante Anordnungen von Multiphasenpumpen reduzieren das Ausfallrisiko, insbesondere das Risiko eines Totalausfalls. Der Einsatz von drehzahlveränderlichen Multiphasenpumpen erlaubt bei einer entsprechenden Auslegung im Normalfall einen verschleißmindernden Betrieb mit reduzierter Drehzahl, während bei Ausfall einer Pumpe das verbleibende Aggregat oder die verbleibenden Aggregate mit einer erhöhten Betriebsdrehzahl den Förderstromausfall weitgehend kompensieren kann.

Die Multiphasengemische bei der Förderung von Kohlenwasserstoffen bestehen, wie oben angedeutet, aus unterschiedlichen Stoffen in unterschiedlichen Aggregatzuständen, zum Beispiel Wasser mit gegebenenfalls Sandbeimengungen, Gaskondensaten, Rohöl, Erdgas oder Erdölbegleitgas, die voneinander abweichende spezifische Gewichte aufweisen. Sollen Multiphasengemische auf mehrere Multiphasenpumpen aufgeteilt werden, ergibt sich das Problem einer gleichmäßigen Aufteilung, da die schweren Stoffe wie Flüssigkeiten bevorzugt in unten angeordnete Abgänge fallen und an seitlich angeordneten Abgängen bevorzugt vorbeifließen. Es besteht also das Problem, dass bei Verzweigungen eine gleichmäßige Aufteilung der Förderbestandteile sichergestellt werden muss, um damit eine erhöhte Temperaturbelastung für durch mit überwiegend Gasanteilen belastete Pumpen zu vermeiden.

Eine Möglichkeit zum Erzielen eines gleichmäßigen Aufteilens des Eingangs des Produktstroms besteht in einer horizontalen, streng symmetrischen Anordnung der Verteilstellen. Dies hat den Nachteil eines hohen Platzbedarfs, eines hohen Gewichts und damit verbundenen hohen Kosten, darüber hinaus muss immer eine 2^{x} - Anzahl an Pumpen vorhanden sein, um eine gleichmäßige Aufteilung zu erreichen. Bei Ausfall einer Pumpe, Anordnung von unterschiedlichen Pumpentypen, beim Abschalten einzelner Pumpen oder anderen Störungen kommt es zu ungleichmäßigen Verteilungen, die zu Überlastungen einzelner Multiphasenpumpen führen können.

Die DE 693 05 301 T2 betrifft eine Einrichtung zur Regelung und Verteilung einer mehrphasigen Flüssigkeit mit einem Speicherbehälter zum Trennen einer flüssigen Phase und einer gasförmigen Phase mit wenigstens einer Einlassöffnung für das Mehrphasenfluid und mit Mitteln zur Entnahme seines Inhalts. Die Vorrichtung weist zumindest zwei Entnahmerohre auf, die sich in den Speicher hineinerstrecken, so dass sie die Grenzfläche zwischen der gasförmigen Phase und der flüssigen Phase im Normalbetrieb durchsetzen, wobei jedes dieser Entnahmerohre wenigstens eine Austrittsöffnung sowie Entnahmeöffnung umfasst, die über wenigstens einen Teil ihrer Länge verteilt sind. Die durch die Entnahmerohre erzeugten Abströme werden über Leitungen zu einer Sammelleitung geführt, die mit einer nachgeschalteten Pumpanordnung verbunden ist. Messmittel für den Druck des Abstroms sind am Eintritt jeder Pumpe positioniert und liefern den auf der Saugseite gemessenen Druckwert des Abstroms. Auf der Grundlage errechneter Werte gibt ein Prozessor ein Steuersignal, das das Öffnen und/oder Schließen von Sammelleitungsventilen derart steuert, dass der Abstrom gegen eine oder mehrere Pumpen verteilt wird.

Die DE 88 10 901 U1 betrifft eine Vorrichtung zum Verteilen eines strömenden Flüssigkeits-Gas-Gemisches in mehrere Teilströme mit einem zylindrischen Abscheider mit vertikaler Achse, in den ein Zuführrohr für das Gemisch einmündet und durch dessen Boden wenigstens zwei vertikale Abführrohre für die Teilströme in den Abscheider hineingeführt sind. Die Zuführ- und Abführrohre enden oberhalb des Flüssigkeitsspiegels im Abscheider und weisen sowohl oberhalb als auch unterhalb des Flüssigkeitsspiegels Durchtrittsöffnungen auf. In dem Abscheider ist ein innerer Zylinder angeordnet, der die Abführrohre umgibt und der Überströmöffnungen aufweist, der den durch den inneren Zylinder begrenzten Innenraum mit dem den inneren Zylinder umgebenen Ringraum verbindet. Die Querschnittsfläche oberer Überströmöffnungen können größer als diejenige unterer Überströmöffnungen sein.

Aufgabe der vorliegenden Erfindung ist es, eine möglichst gleichmäßige und lang andauernde Versorgung von Multiphasenpumpen mit einer ausreichenden Flüssigkeitsmenge sicherzustellen, um die Temperaturbelastung auch bei langer Gasphasenförderung zu reduzieren.

Erfindungsgemäß wird diese Aufgabe durch einen Sammelbehälter mit den Merkmalen des Hauptanspruches, ein System mit den Merkmalen des nebengeordneten Anspruchs und ein Verfahren mit den Merkmalen des nebengeordneten Verfahrensanspruchs gelöst. Vorteilhafte Ausgestaltungen und Weiterbildungen der Erfindung sind in den Unteransprüchen, der Beschreibung und in den Figuren dargelegt.

Der erfindungsgemäße Sammelbehälter für Multiphasengemische aus einer Kohlenwasserstoffquelle mit zumindest einem Einlass zum Einleiten von Multiphasengemischen in den Sammelbehälter und mehreren Auslassstutzen, an die Pumpen anschließbar sind, über die Multiphasengemische verpumpt werden, sieht vor, dass den Auslassstutzen nach innen gerichtete, über den Sammelbehälterboden nach oben überstehende Einbauten zugeordnet sind, die eine erste obere Öffnung und eine zweite untere Öffnung aufweisen, wobei der Strömungsquerschnitt der unteren Öffnung kleiner als der der oberen Öffnung ist und der unteren Öffnung eine verstellbare Drossel- oder Schließeinrichtung zu geordnet ist. Durch die Einbauten, die in dem Sammelbehälter vorhanden sind, werden die unterschiedlichen Eigenschaften der Flüssigkeitsphase und der Gasphase, insbesondere von Erdöl und Erdgas, hinsichtlich des spezifischen Gewichts genutzt, so dass eine Dosierwirkung und eine gewünschte Produktverteilung erzielt wird. Die Gasphase kann relativ ungehindert durch die obere Öffnung hindurchströmen, während die sich am Boden des Sammelbehälters absetzende Flüssigkeitsphase sammelt und durch die relativ kleine, untere Öffnung nur langsam zu den Pumpen geleitet wird, die die Multiphasengemische abtransportieren. Ein gemeinsamer Einlass oder mehrere Einlässe sind vorgesehen, damit das Multiphasengemisch in den Sammelbehälter einströmen kann. Das Multiphasengemisch kann beispielsweise direkt aus dem Bohrloch in den Sammelbehälter einströmen. In dem Sammelbehälter findet eine gravitationsbedingte Trennung von der Gasphase und der Flüssigkeitsphase statt. Die Flüssigkeitsphase setzt sich an dem Boden des Sammelbehälters ab, die Gasphase verteilt sich oberhalb der Flüssigkeitsphase innerhalb des Sammelbehälters. Durch die obere, große Öffnung kann die Gasphase ungehindert zu den einzelnen Pumpen, die mit ihrer Einlassseite an dem Sammelbehälter angeschlossen sind, geleitet werden. Ebenfalls strömt die Flüssigkeitsphase ungehindert durch die obere Öffnung, sofern der Füllstand innerhalb des Sammelbehälters hoch genug ist, um die obere Öffnung zu erreichen. Unterhalb der oberen Öffnung bildet sich ein Sumpf, der mit Flüssigkeitsphase und gegebenenfalls Feststoffanteilen gefüllt ist. Ein Abfluss des Sumpfes erfolgt durch die zweite, untere Öffnung in den Einbauten, die vorzugsweise auf dem Niveau des Sammelbehälterbodens oder knapp oberhalb des Sammelbehälterbodens angeordnet ist. Die Flüssigkeitsphase kann so aus dem Sammelbehälter durch die untere Öffnung abfließen und gelangt zu der jeweiligen Pumpe, die an dem Auslassstutzen angeschlossen ist. Dadurch wird sichergestellt, dass über einen langen Zeitraum, nämlich bis der Flüssigkeitssumpf entleert ist, gleichmäßig aus dem Sammelbehälter Flüssigkeitsphase durch die jeweiligen Auslassstutzen zu den jeweiligen Pumpen abgeleitet wird. Über die Bereitstellung der minimal erforderlichen Flüssigkeitsmenge über einen langen Zeitraum wird sichergestellt, dass auch während der Förderung ausschließlich von der Gasphase durch das Einlassrohr eine thermische Stabilität der an die Auslassstutzen angeschlossenen Pumpen erreicht wird. Über die den Pumpen zugeleitete Flüssigkeitsphase findet der hauptsächliche Abtransport der innerhalb der Pumpe entstehenden Kompressionswärme für die Gasphase statt. Darüber hinaus wird in den Pumpen, die beispielsweise als Schraubenspindelpumpen ausgebildet sind, eine Schmierung und eine Abdichtung der Spalte erreicht, die zwischen den Schraubenspindeln vorhanden sind. Dadurch wird die Temperaturstabilität, Dichtigkeit der Schraubenspindeln gegen ein Zurückdrücken des geförderten Produktes und die Haltbarkeit der Pumpen erhöht. Um eine Veränderung des Fluidstroms durch die untere Öffnung bewirken zu können, kann der unteren Öffnung eine verstellbare Drosseleinrichtung oder eine Schließeinrichtung zugeordnet sein, über die der Strömungsquerschnitt verringert oder die Öffnung verschlossen werden kann. Grundsätzlich ist es auch möglich, dass die obere Öffnung eine Drosseleinrichtung oder Schließeinrichtung aufweist, um bestimmte Auslässe zu sperren oder das Strömungsverhalten auf eine gewünschte Art und Weise zu beeinflussen.

Vorteilhafterweise ist vorgesehen, dass der Auslassstutzen oder die Auslassstutzen schräg nach unten oder senkrecht nach oben orientiert sind. Dadurch wird der Abtransport der Flüssigkeitsphase durch den Auslassstutzen erleichtert. Darüber hinaus kann an oder in den Auslassstutzen die Anordnung der Einbauten vorgesehen sein, so dass auf diese Weise eine einfache Zuordnung der unteren Öffnungen in den Einbauten zu den jeweiligen Auslassstutzen und damit zu den jeweiligen Auslasskanälen und den daran angeschlossenen Pumpen verwirklicht werden.

Der Sammelbehälter kann bevorzugt als Sammelrohr oder Sammeltank ausgebildet sein, alternative Ausgestaltungen des Sammelbehälters sind möglich.

Durch die Anordnung der Einbauten dergestalt, dass deren obere Öffnung senkrecht nach oben orientiert ist, wird im Wesentlichen sichergestellt, dass nur Flüssigkeitsphase oberhalb des Niveaus der Öffnung durch die obere, große Öffnung hindurchtreten kann.

Die Einbauten können verschieblich und/oder verdrehbar in dem Sammelbehälter gelagert sein, um eine Anpassung an verschiedene Anforderungen zu realisieren. Eine verschiebliche Lagerung der Einbauten kann zu einer Niveauabsenkung oder Niveauerhöhung des Flüssigkeitsspiegels führen, gleiches gilt für eine verdrehbare Ausgestaltung der Einbauten in dem Sammelbehälter. Bei einer schrägen Anordnung der Einbauten kann durch ein Verdrehen beispielsweise das Niveau oder der Querschnitt der unteren Öffnung verändert werden, gleiches gilt für eine verschiebbare Anordnung der Einbauten innerhalb des Sammelbehälters.

Die Einbauten können als Einsätze, beispielsweise korbähnliche, verstellbare Einsätze, oder als hohle Abschnitte, Schwallbleche oder Leitbleche ausgebildet sein, um eine Bildung eines Flüssigkeitssumpfes in dem Sammelbehälter und eine kontrollierte Ableitung durch eine Öffnung innerhalb der Einbauten in Nähe des Sammelbehälterbodens zu erreichen.

Den Einbauten können Verstelleinrichtungen zugeordnet sein, über die von außerhalb des Sammelbehälters der freie Strömungsquerschnitt der oberen und/oder unteren Öffnung in den Einbauten veränderbar ist. Durch dieses Verstelleinrichtung ist es möglich, während des Betriebes einer Fördereinrichtung die Parameter zu ändern, um beispielsweise einzelne Pumpen abschalten zu können, mit einer größeren Menge an Flüssigkeitsphase zu versorgen oder die Menge der zugeführten Flüssigkeitsphase zu verringern.

Bevorzugt ist der Sammelbehälter geschlossen ausgebildet, um den Innendruck zur Förderunterstützung verwenden zu können. Überdruckventile können angeordnet sein, um bei einem Überschreiten eines Maximaldrucks ein Versagen der Behälterstruktur zu vermeiden.

Es können Absperreinrichtungen an den Einbauten, Auslassstutzen und/oder Auslassrohrleitungen angeordnet sein, um einzelne Pumpen, die dem Sammelbehälter nachgeschaltet sind, absperren zu können. Dadurch können diese Pumpen problemlos gewartet werden. Ebenfalls ist es möglich, durch das Absperren einzelner Förderpumpen die Förderleistung an die gewünschte Fördermenge anzupassen.

In dem Sammelbehälter können Separationseinrichtungen angeordnet sein, die die Gasphase von der Flüssigkeitsphase trennen. Diese Separationseinrichtungen können Umleiteinrichtungen, Labyrinthe, Abscheider oder Strömungshindernisse sein. Ebenfalls kann die Separationseinrichtung durch eine Aufweitung des Strömungsquerschnitts gebildet werden, um eine gravitationsbedingte Separation zu erleichtern. In dem Sammelbehälter werden vorzugsweise Strömungsgeschwindigkeiten von maximal 0,5m pro Sekunde erreicht, entsprechende Einrichtungen zur Einhaltung dieser Strömungsgeschwindigkeit des Multiphasengemisches können vorgesehen sein, beispielsweise Drosseln oder dergleichen. Durch die Begrenzung der Strömungsgeschwindigkeit auf der Einlassseite des Speicherbehälters kann die maximale Geschwindigkeit eingestellt werden. Um diese Strömungsgeschwindigkeit einhalten zu können ist der Sammelbehälter entsprechend groß zu dimensionieren.

Die Auslassleitungen, die von den Auslassstutzen zu den Pumpen, insbesondere Multiphasenpumpen, führen, sind so dimensioniert, dass relativ große Strömungsgeschwindigkeiten von mindestens 3 m pro Sekunde auftreten, um innerhalb der Rohrleitung eine Separation zu vermeiden.

Das erfindungsgemäße System aus einem Sammelbehälter und mehreren daran angeschlossenen Multiphasenpumpen ermöglicht einen Parallelbetrieb bei großen Förderströmen unter Verwendung standardisierter Baugrößen der angeschlossenen Multiphasenpumpen und eine Variabilität in der Fördermenge. Durch redundante Pumpen, die nicht an ihren Leistungsgrenzen betrieben werden, kann eine Maximierung der Verfügbarkeit des Gesamtsystems erreicht werden, da bei einem Ausfall einer parallel geschalteten Pumpe der Ausfall von den anderen Pumpen übernommen werden kann.

Neben der direkten Förderung durch die parallel geschalteten Pumpen auf der Auslassseite ist es möglich, dass auf der Einlassseite des Sammelbehälters zumindest eine Einlass-Multiphasenpumpe angeordnet ist, wobei von zumindest einem Anschlussstutzen eine Leitung von dem Sammelbehälter an die Einlassseite der Einlass-Multiphasenpumpe gelegt ist, um eine Rezirkulation einer Flüssigkeitsphase auf der Einlasspumpenseite zu ermöglichen. Dadurch kann die thermische Stabilität der Einlass-Multiphasenpumpe vergrößert werden.

Eine Steuereinrichtung kann vorgesehen sein, die mit an den Multiphasenpumpen angeordneten Sensoren und Verstelleinrichtungen gekoppelt ist und auf der Grundlage der Sensorwerte eine Verstellung des Strömungsquerschnitts der unteren Öffnung bewirkt. Werden beispielsweise zu hohe Temperaturen an einzelnen Multiphasenpumpen festgestellt, kann durch Vergrößerung des Strömungsquerschnittes der unteren Öffnung ein erhöhter Flüssigkeitsanteil dem zu fördernden Multiphasengemisch zugeführt werden, um die innerhalb der Multiphasepumpe anfallende thermische Energie aus dem Pumpensystem auszutragen. Alternativ oder gleichzeitig kann eine Reduzierung des Gasanteils erfolgen, um die Menge an neu entstehender Kompressionswärme zu verringern.

Das Verfahren zum Separieren und Aufteilen eines Multiphasengemisches auf mehrere Multiphasepumpen sieht vor, dass das Multiphasengemisch in einen Sammelbehälter geleitet und mittels Separationseinrichtungen separiert wird, wobei die separierte Flüssigkeitsphase dosiert einzelnen Multiphasenpumpen zugeleitet wird. Dabei kann der Sammelbehälter als ein separater Sammelbehälter ausgebildet sein, in den Multiphasengemische direkt aus einer Quelle eingeleitet werden. Alternativ wird das Multiphasengemisch von einer Pumpe in einen separaten Sammelbehälter eingeleitet und anschließend über weitere Pumpen abgepumpt, schließlich besteht die Möglichkeit, dass der Sammelbehälter als Teil einer Multiphasenpumpe ausgebildet ist und von dort aus anderen Pumpen dosiert separierte Flüssigkeitsphase zugeleitet wird. Dadurch ist es möglich, über Querverbindungen parallel angeordneter Pumpen eine Minimalversorgung mit Flüssigkeitsphase sicherzustellen, wenn innerhalb einer oder mehrerer Pumpen ausreichend Flüssigkeitsphase angesammelt ist und diese dann gesteuert zu anderen Pumpen geleitet wird, die einen geringeren Flüssigkeitsanteil fördern. Der zu fördernde Flüssigkeitsanteil kann über Sensoren ermittelt werden, so dass auf Grundlage der Sensordaten, die zum Beispiel die Temperatur, die Gas- oder Flüssigkeitsmengen, Drücke und dergleichen erfassen, dann die Zufuhr der separierten Flüssigkeitsphase von der Druckseite der Pumpe zu der Saugseite der anfordernden Pumpe geregelt wird.

Das Multiphasengemisch kann in dem Sammelbehälter durch Verringerung der Strömungsgeschwindigkeit des einströmenden Multiphasengemisches separiert werden, beispielsweise indem der Strömungsquerschnitt vergrößert wird. Dadurch findet eine gravitationsbedingte Separation von Flüssigkeitsphase und Gasphase statt.
Abgetrennte Flüssigkeitsphase kann einer in Förderrichtung vor dem Sammelbehälter angeordneten Pumpe auf der Einlassseite zugeleitet werden, so dass eine Rezirkulation stattfindet. Die Menge der zugeleiteten Flüssigkeitsphase kann jeweils in Abhängigkeit von Sensorparametern eingestellt werden, beispielsweise auf Grundlage der geförderten Flüssigkeitsphase oder auf der Grundlage von Temperaturwerten. Nachfolgend werden Ausführungsbeispiele der Erfindung anhand der Figuren näher erläutert. Es zeigen:
- Fig. 1: eine Gesamtansicht einer Förderanlage;
- Fig. 2: eine Darstellung eines rohrförmigen Sammelbehälters;
- Fig. 3 bis 6: Schnittansichten verschiedener Sammelbehälter;
- Fig. 7: einen tonnenförmigen Sammelbehälter;
- Fig. 8: eine Schnittdarstellung mit schrägem Auslassstutzen;
- Fig. 9: eine Schnittdarstellung mit senkrechtem Auslassstutzen;
- Fig. 10: eine Schnittdarstellung mit Ventilen;
- Fig. 11: eines Schnittdarstellung mit Verschlus- und Dosierseinrichtungen; sowie
- Fig. 12: einen Schaltplan einer Förderanlage.

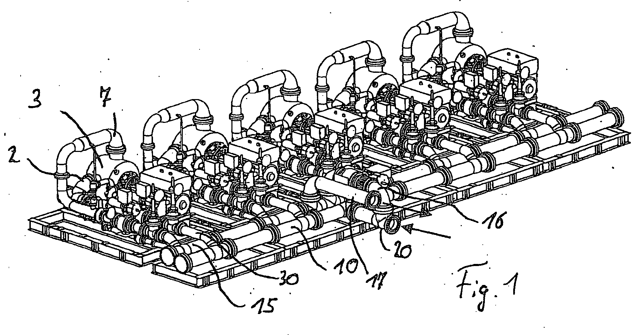

In der Figur 1 ist eine Förderanlage für Multiphasengemische mit mehreren, parallel angeordneten Multiphasenpumpen 3 dargestellt, die jeweils auf einem Fundament angeordnet sind. Die Multiphasenpumpen 3 weisen einen Einlass 2 und einen Auslass 7 auf. Von dem Auslass 7 führt eine Leitung zu einem Sammelbehälter 15, von dem aus das gesammelte Gemisch, das durch die Multiphasenpumpen 3, die in der Regel als Schraubenspindelpumpen ausgebildet sind, gesammelt und durch einen Auslass 17 abgefördert wird. Die Einlassseite 2 der Multiphasenpumpen 3 ist mit Auslasskanälen 30 eines Sammelbehälters 10 verbunden. Dieser Sammelbehälter 10 weist einen Einlass 20 auf, durch den das Multiphasengemisch, in der Regel ein Gemisch aus Wasser, Sand, Erdöl, Erdgas und Begleitgasen, durchgeleitet wird. Der Einlass 20 kann direkt zu einem Bohrloch führen, gegebenenfalls kann eine Pumpeinrichtung dem Einlass 20 vorgeschaltet sein. Sollte ein Verpumpen des Multiphasengemisches aufgrund des vorhandenen Eigendruckes nicht notwendig sein, ist ein Bypass 16 vorgesehen, der den Einlass 20 unmittelbar mit dem Auslass-Sammelbehälter 15 verbindet.

In dem Sammelbehälter 10 sind Einbauten angeordnet, die dem jeweiligen Auslassstutzen 30 zugeordnet sind, über die eine dosierte Flüssigkeitszuleitung den einzelnen Pumpen 3 gegenüber sichergestellt wird. Der Sammelbehälter 10, auch als Einlass-Header bezeichnet, sammelt das von der Quelle stammende Multiphasengemisch und verteilt es gleichmäßig auf die einzelnen Multiphasenpumpen 3. Der Einlass-Sammelbehälter 10 ist in dem dargestellten Ausführungsbeispiel im Wesentlichen horizontal ausgerichtet und als Rohr ausgebildet, so dass eine gravitationsbedingte Separation der einzelnen Komponenten des Multiphasengemisches stattfindet. Die schwereren Anteile, also Feststoffe und Flüssigkeitsphasen, werden auf dem Boden des Sammelbehälters 10 gesammelt, wäh,rend sich die leichteren Komponenten oberhalb der Flüssigkeitsphase und der Festphase ansammeln.

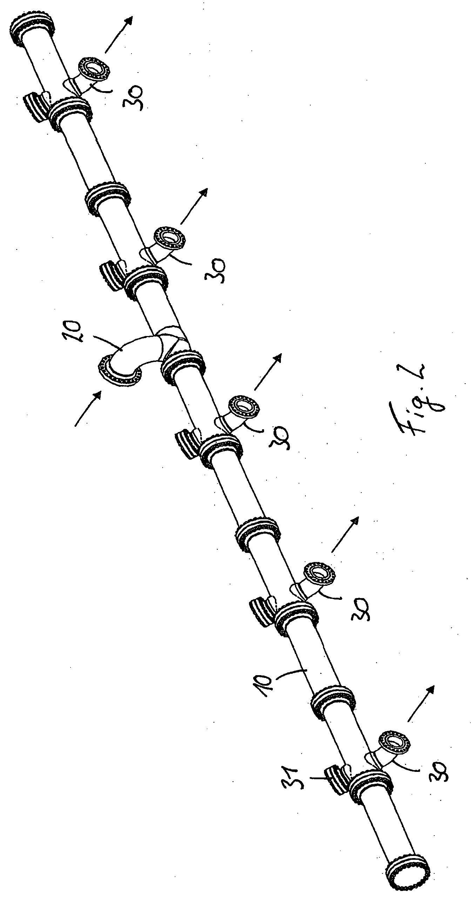

In der Figur 2 ist ein Sammelbehälter 10 in Einzeldarstellung gezeigt. Der Sammelbehälter 10 ist als rohrförmiger Grundkörper mit einem Einlass 20, der im dargestellten Ausführungsbeispiel als ein 90°-Stutzen ausbildet ist, und mehreren Auslassstutzen 30 versehen, die zu den Multiphasenpumpen führen. Der Sammelbehälter 10 ist im Wesentlichen modular aufgebaut und sieht einen rohrförmigen Grundkörper vor, an dessen Enden Schraubflansche vorgesehen sind. In dem Rohrkörper zwischen den Schraubflanschen sind die Auslassstutzen 30 angeordnet, dem Auslassstutzen 30 gegenüber sind Zugangsflansche 31 angeordnet, über die beispielsweise ein Einsatz in dem Auslassstutzen 30 eingesetzt und ausgerichtet werden kann. Der Einlass 20 mit dem Einlassstutzen kann entweder angeschweißt oder ebenfalls angeschraubt werden. Der Einlass 20 kann als T-Stück mit Schraubflanschen versehen sein, so dass er zwischen zwei Rohrabschnitten des Sammelkörpers 10 eingeschraubt werden kann. Durch die Schraubbauweise können nahezu beliebig viele Auslassstutzen 30 parallel zueinander geschaltet werden, so dass eine entsprechend große Anzahl an Pumpen an dem Sammelbehälter 10 angeschlossen werden kann. Ebenfalls ist es möglich, an verschiedenen Stellen Einlässe 20 vorzusehen, die einfach zwischen zwei Rohrabschnitte eingeschraubt werden.

Der Strömungsverlauf des Multiphasengemisches ist durch die Pfeile angedeutet, der obere Pfeil zeigt den Einlass des Multiphasengemisches durch den Einlass 20 an, die unteren Pfeile, die dem Auslassstutzen 30 zugeordnet sind zeigen an, dass das aufgeteilte Multiphasengemisch durch die Auslassstutzen 30 jeweils abgeleitet wird. In dem dargestellten Ausführungsbeispiel sind die Auslassstutzen 30 schräg nach unten orientiert und münden an der tiefsten Stelle des Sammelbehälters 10, so dass die gesamte Flüssigkeitsphase, die sich in dem Sammelbehälter 10 abgesetzt hat, leicht durch die Auslassstutzen 30 abtransportiert werden kann.

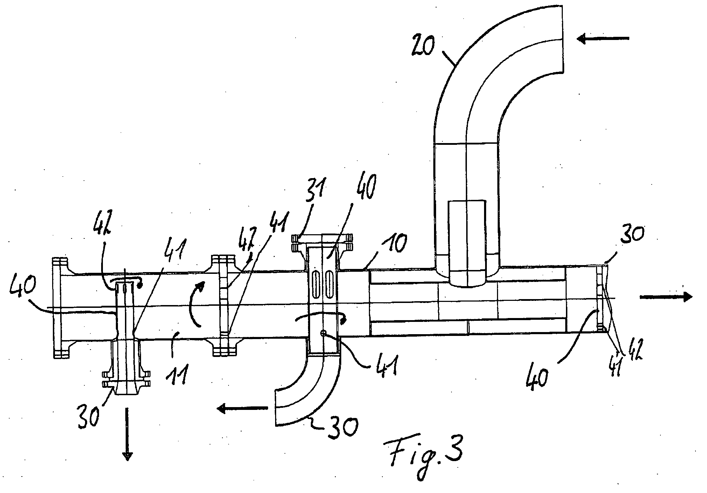

Eine Variante der Ausgestaltung des Sammelbehälters 10 ist in der Figur 3 dargestellt. Der Einlass 20 mit dem 90°-Einlassstutzen ist um 90° verdreht dargestellt. Über den Einlass 20 gelangt, wie durch den Pfeil angedeutet, das Multiphasengemisch in den Sammelbehälter 10. In dem Einlass 20 können Einrichtungen zur Drallbeeinflussung vorgesehen sein, um das Multiphasengemisch möglichst gleichmäßig zu verteilen.

Innerhalb des Sammelbehälters 10, der als Aneinanderreihung von Rohrsegmenten ausgebildet ist, sind Einbauten 40 angeordnet, die dem Auslassstutzen 30 zugeordnet sind. Ein rohrförmiger Einsatz 40 ist in den Auslassstutzen 30 eingesetzt. Der Einsatz 40 ist drehbar in dem Sammelbehälter 10 angeordnet und weist eine untere Öffnung 41 und mehrere obere Öffnungen 42 auf, die sich jeweils oberhalb des Niveaus des Sammelbehälterbodens 11 erstrecken. Über den Zugangsflansch 31 kann eine Verdrehung des Einsatzes vorgenommen werden. Der Einsatz 40 ist auswechselbar innerhalb des Sammelbehälters 10 angeordnet, so dass die Geometrie durch Austausch gegen einen anderen Einsatz verändert werden kann.

In der Figur 3 ist links neben dem ersten Auslassstutzen 3 ein weiteres Einbauteil 40 in Gestalt eines Schwallbleches angeordnet. Das Schwallblech ist zwischen zwei Schraubflanschen der Rohrabschnitte festgelegt. Auch hier ist eine untere Öffnung 41 vorgesehen, die einen kleineren Strömungsquerschnitt als die obere Öffnung 42 aufweist. Das Schwallblech kann in unterschiedlichen Positionen zwischen den beiden Rohrabschnitten eingebaut werden, um das Niveau des Flüssigkeitssumpfes zwischen dem Schwallblech und dem Einlass 20 einstellen zu können.

In der Figur 3 ist links neben dem Schwallblech ein weiterer Auslassstutzen 30 vorgesehen, der einen drehbaren Einsatz 40 aufweist, der ebenfalls eine untere Öffnung 41 und mehrere obere Öffnungen 42 mit einem größeren Durchmesser als die untere Öffnung 41 aufweist. Der Einsatz 40 kann von außen über den Auslassstutzen 30 verdreht werden, so dass eine Verstellung der Position und gegebenenfalls der Durchmesserquerschnitte der Öffnungen 41, 42 erreicht werden kann.

Rechts neben dem Einlass 20 ist ein weiteres Schwallblech als Einbauteil 40 mit einer oberen Öffnung 42 und einer unteren Öffnung 41 gezeigt, die zu einem Auslassstutzen 30 führt. Durch die Ausgestaltung des Sammelbehälters 10 gemäß Figur 3 ist es möglich, innerhalb des Sammelbehälters 10 einen Flüssigkeitssumpf zu bevorraten, der bis maximal zur Höhe der oberen Öffnungen 42 reicht. Je nach Dimensionierung der unteren Öffnungen 41 und des Volumens des Sammelkörpers 10 wird dadurch sichergestellt, dass über einen relativ langen Zeitraum nur eine geringe Menge an Flüssigkeit durch die Auslassstutzen 30 abgeführt wird, so dass die sich an die Auslassstutzen 30 anschließenden Pumpen, insbesondere Schraubenspindel-Multiphasenpumpen stets mit einem minimalen Flüssigkeitsanteil mit dem Förderstrom versehen werden. Dieser minimale Flüssigkeitsanteil dichtet die konstruktiv bedingte Spalte zwischen den Förderelementen in der Schraubenspindelpumpe ab. Diese Abdichtung ist notwendig, damit die Pumpe Gas fördern kann, das sonst ungehindert durch die Spalte zurückströmen würde. Weiterhin dient der minimale Flüssigkeitsstrom als Kühlmittel zum Austragen der bei der Gasförderung erzeugten Kompressionswärme aus der Pumpe.

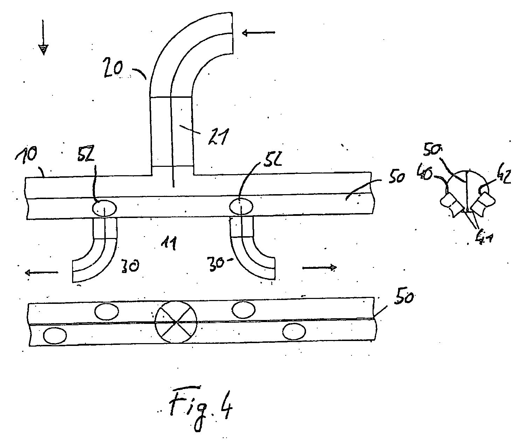

In der Figur 4 ist eine Variante der Erfindung dargestellt. Ein vertikal orientiertes Trennblech 50 ist innerhalb des Sammelbehälters 10 angeordnet. Eine Drallbeeinflussungseinrichtung 21 kann in dem Einlass 20 vorgesehen sein. Das vertikale Trennblech 50 dient zu einer ersten Aufteilung des durch den Einlass 20 eintretenden Multiphasenstroms. Auf diese Weise wird eine erste Aufteilung des Multiphasenstroms rechts und links der Längserstreckung vorgenommen. An dem unteren Ende des Sammelbehälters 10 sind beidseitig des Trennbleches 50 Auslassstutzen 30 angeordnet, die jeweils zu einer Pumpe führen. Innerhalb des Trennbleches 50 sind Ausgleichsfenster 52 vorgesehen, um ein Überströmen zu ermöglichen. Die Ausgleichsfenster 52 sind im unteren Bereich des Trennbleches angeordnet, damit überwiegend Flüssigkeitsphase zwischen den beiden Kammern des Sammelbehälters ausgetauscht wird. In der Schnittdarstellung rechts in der Figur 4 ist zu erkennen, dass als Einbauten 40 schräg in die jeweilige Kammer hineinragende Stutzen vorgesehen sind, die an ihrem unteren Ende, das dem Sammelbehälterboden 11 zugeordnet ist, kleine Bohrungen 41 aufweisen, über die der minimale Flüssigkeitsstrom den jeweiligen Pumpen zugeführt wird. Die obere Öffnung 42 wird durch den Durchmesser des Stutzens ausgebildet.

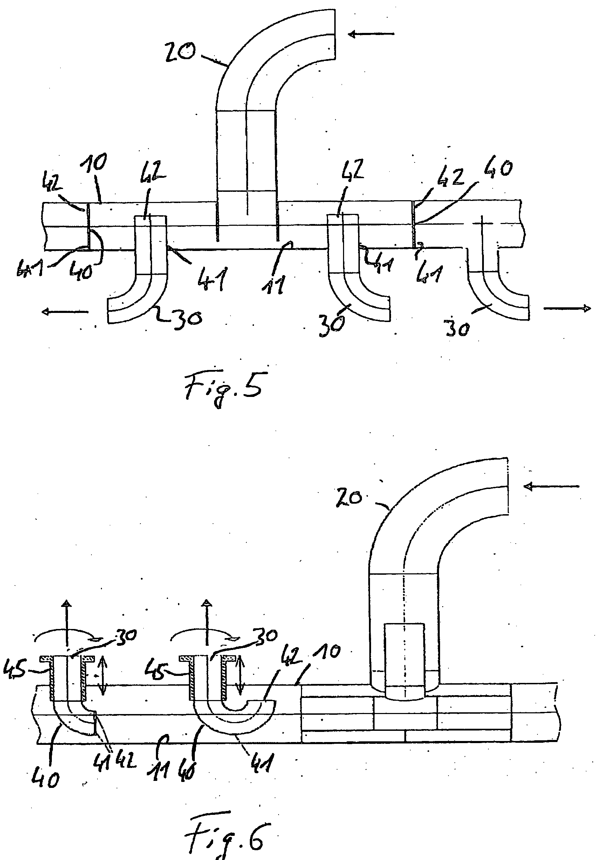

Eine weitere Variante der Erfindung ist in der Figur 5 gezeigt. Die Einbauten 40 beiderseits des Einlasses 20 sehen eine senkrecht nach oben orientierte obere Öffnung 42 und eine im Bereich des Sammelbehälterbodens 11 angeordnete untere Bohrung 41 vor. Beidseitig neben den ersten Auslassstutzen 30 sind Schwallbleche 40 angeordnet, die ebenfalls eine obere Öffnung 42 die eine untere Öffnung 41 aufweisen. Rechts neben dem rechten Schwallblech 40 ist ein weiterer Auslassstutzen 30 angeordnet, der zu einer weiteren Pumpe führt. Das Schwallblech 40 ist somit dem rechts angeordneten Auslassstutzen 30 zugeordnet und bewirkt, dass nur eine dosierte Menge der Flüssigkeitsphase durch die untere Öffnung 41 hindurch zu dem rechten Auslassstutzen 30 gelangt.

Die Figur 6 zeigt eine weitere Variante der Erfindung, bei der mehrere Auslassstutzen 30 vorgesehen sind. Die Auslassstutzen 30 sind nach oben orientiert ausgebildet und drehbar an dem Sammelbehälter 10 gelagert. Durch die Drehbarkeit kann eine Höhenverstellung aufgrund eines eingebauten Gewindes 45 an der Außenseite des Stutzens 30 realisiert werden. Die Höhenverstellung ist durch die Doppelpfeile angedeutet. Der linke Auslassstutzen 30 weist einen 90°-Winkel als Einbauteil auf, die Einlassseite ist durch ein Blech verschlossen, das eine untere, kleine Öffnung 41 und eine obere große Öffnung 42 aufweist. Auch durch eine solche Ausgestaltung wird ein Sumpf innerhalb des Sammelbehälters 10 gebildet. Je weiter die Einbauten 40 nach unten verlagert werden, desto mehr von der Flüssigkeitsphase, die sich an dem Sammelbehälterboden 11 absetzt, kann abgefördert werden.

Der rechte Auslassstutzen 31 ist ebenfalls höhenverstellbar über ein Gewinde 45 an dem Sammelbehälter 10 gelagert. An dem sammelbehälterseitigen Ende ist ein U-förmiger Anschluss ausgebildet, an dessen Unterseite eine kleine Bohrung 41 angeordnet ist, die in Richtung auf den Sammelbehälterboden 11 orientiert ist. Die größere Öffnung 42 wird durch den offenen, nach oben gerichteten Querschnitt des U-förmigen Rohres gebildet.

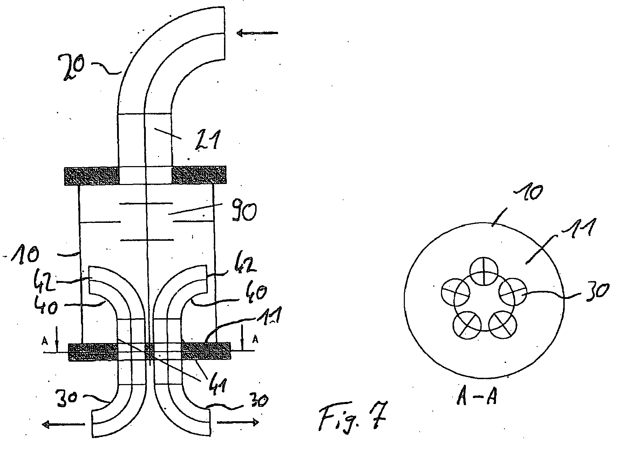

In der Figur 7 ist eine weitere Variante der Erfindung dargestellt. Nach dem Einlass 20 mit einer Einrichtung zur Beeinflussung eines Dralls ist eine Kolonne 90 angeordnet, die eine Separation der Flüssigkeitsphase und der Gasphase begünstigt. Der Sammelbehälter 10, der diesmal tonnenförmig ausgebildet ist, weist an seinem Boden 11 beispielsweise fünf Auslassstutzen 30 auf, an die sich Einbauten 40 in Gestalt von gebogenen Rohren anschließen. Die obere Öffnung 42 ist waagerecht orientiert und zeigt hier zur Außenwand des Sammelbehälters 10, eine andere Orientierung der oberen Öffnung 42 ist selbstverständlich möglich. Eine untere Öffnung 41 ist im Bereich des Sammelbehälterbodens 11 in den Einbauten 40 angeordnet.

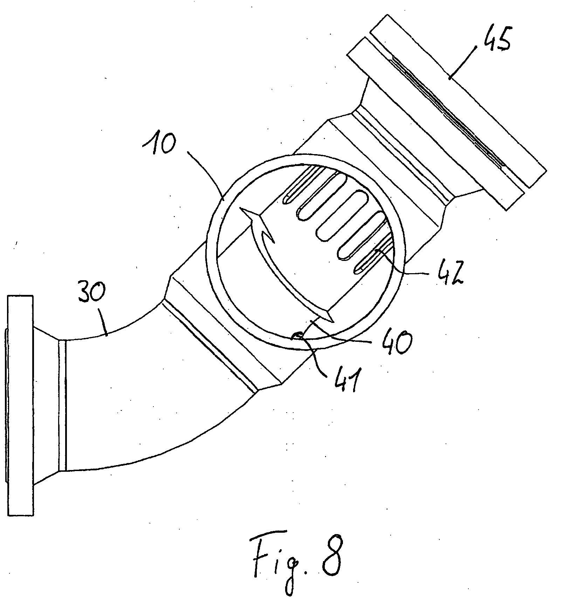

In der Figur 8 ist eine schräge Anordnung des Auslassstutzens 30 ebenso wie der korbartigen Einbauten 40 gezeigt. Die oberen Öffnungen 42 sind als schlitzartige Langlöcher ausgebildet, eine untere Öffnung 41 ist im Bereich des Bodens des rohrförmigen Sammelbehälters 10 angeordnet. Über eine Verstelleinrichtung 45 kann von außen eine Verdrehung erfolgen, so dass die Orientierung der unteren Öffnung 41 verändert werden kann.

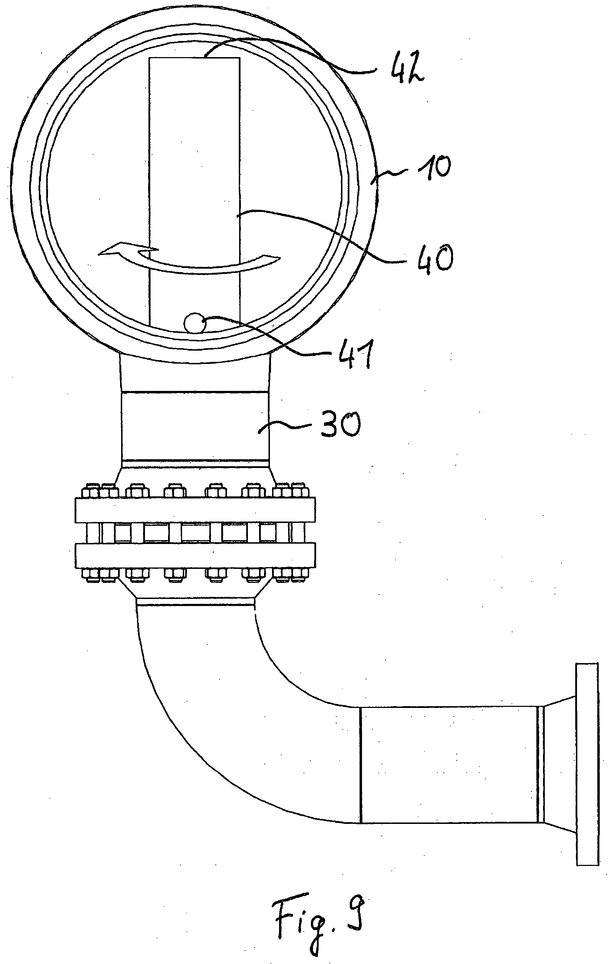

In der Figur 9 ist eine Variante der Erfindung mit einem senkrecht nach unten orientierten Auslassstutzen 30 gezeigt. Die Einbauten 40 weisen eine senkrecht nach oben orientierte obere Öffnung 42 und eine am Tiefpunkt des rohrförmigen Sammelbehälters 10 angeordnete untere Öffnung 41 auf. Die Einbauten 40 sind auch hier drehbar ausgestaltet, um eine Querschnittsänderung der unteren Öffnung 41 je nach Stellung zu erreichen. In der dargestellten Position ist die Öffnung 41 vollständig geöffnet, bei einer Drehung um 90° erfolgt eine maximale Verringerung des Strömungsquerschnittes, gegebenenfalls bis zum Verschluss.

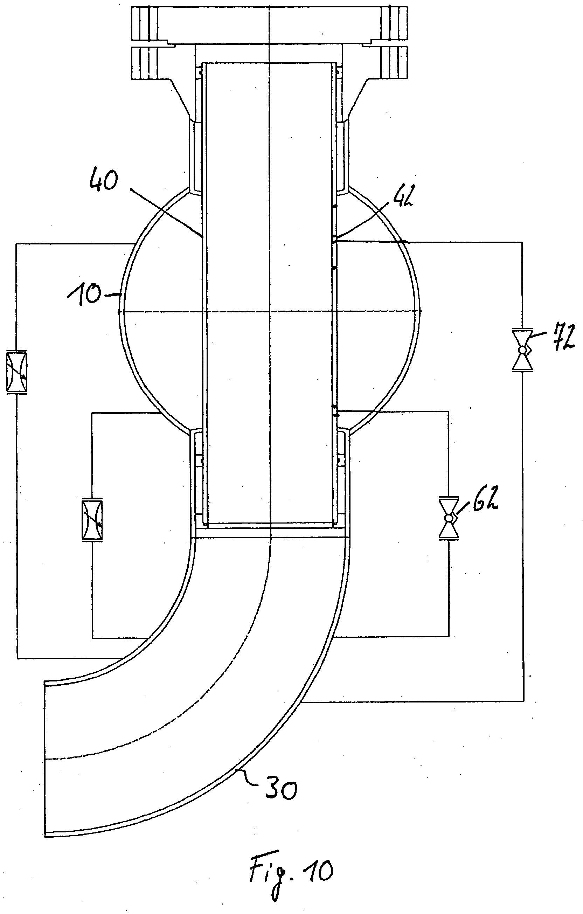

Die Figur 10 zeigt eine schematische Darstellung einer weiteren Variante der Erfindung, bei der den Einbauten 40 bei den unteren Öffnungen 41 eine verstellbare Drossel 62 oder ein verstellbares Ventil zugeordnet ist, gleiches gilt für die obere Öffnung 42, wobei die verstellbaren Ventile oder Dosier- und Schließeinrichtungen 62, 72 nur schematisch dargestellt sind. Die Dosier- und Schließeinrichtungen 62, 72 sind in der Figur 10 nur aus Gründen der besseren Übersichtlichkeit außerhalb des Sammelbehälters 10 mit Leitungen dargestellt, tatsächlich sind in den Einbauten 40 die Öffnungen 41, 42 mit den Dosier- oder Schließeinrichtungen 62, 72 vorgesehen, sodass keine Leitungen vorhanden sind, sondern das geförderte Produkt aus dem Sammelbehälter 10 durch die Öffnungen 41, 42 in die Einbauten 40 eintritt und durch den Auslassstutzen 30 abtransportiert wird.

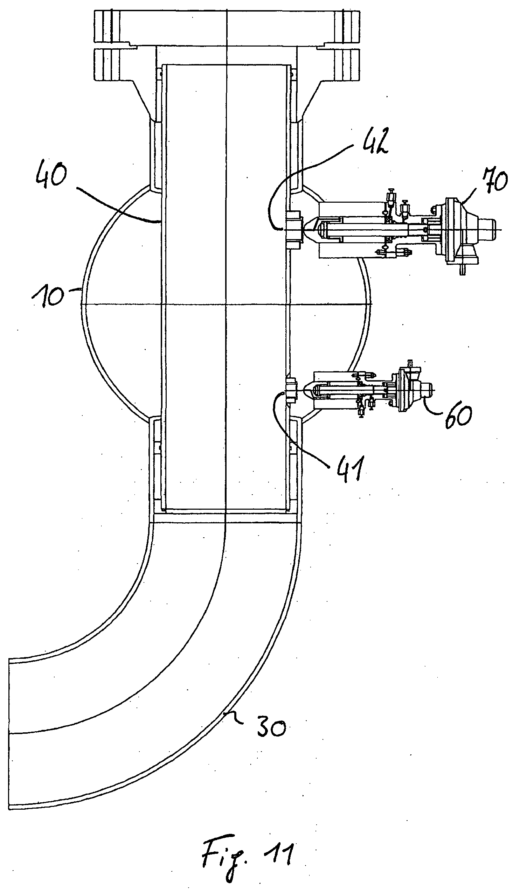

In der Figur 11 ist eine konstruktive Ausgestaltung der Dosier- und Schließeinrichtungen 60, 70 gezeigt, die den Öffnungen 42, 41 zugeordnet sind. Die Dosier- und Schließeinrichtungen 60, 70 sind von außen betätigbar, je nach Stellung der Dosier- und Schließeinrichtungen 60, 70 kann ein teilweises oder vollständiges Verschließen der jeweiligen Öffnung 41, 42 erfolgen, um beispielsweise die Abförderung des zu fördernden Produktes durch den Auslassstutzen 30 zu unterbinden. Dadurch wird eine Wartung der nachgeschalteten Pumpe erleichtert.

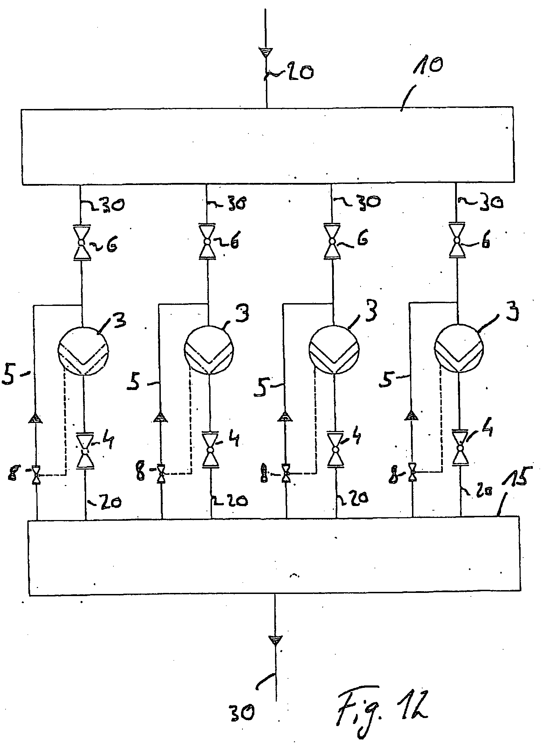

Die Figur 12 zeigt eine schematische Anordnung mehrerer Multiphasepumpen 3, die in Parallelschaltung zwischen zwei Sammelbehältern 10, 15 angeordnet sind. Der erste Sammelbehälter 10 weist einen Einlass 20 auf und ist mit insgesamt vier Auslassstutzen 30 versehen, die Einbauten mit den Öffnungen sind in der Zeichnung nicht dargestellt, in dem Sammelbehälter 10 jedoch vorhanden. An die Auslassstutzen 30 schließen sich Ventile 6 an, über die der Durchfluss durch die Leitungen, die an die Auslassstutzen 30 angeschlossen sind, verändert werden kann. Es besteht die Möglichkeit, die Leitungen vollständig zu schließen. Nach den Ventilen 6 sind die Multiphasenpumpen 3 angeordnet, über die das Multiphasengemisch aus dem Sammelbehälter 10 verpumpt wird. Von den Pumpen 3 führt eine Leitung, in der ein weiteres Ventil 4 angeordnet ist, zu einen zweiten Sammelbehälter 15, der auch als Auslass-Sammelbehälter bezeichnet werden kann. Auch der Auslass-Sammelbehälter 15 kann einen oder mehrere Einbauten aufweisen, die eine obere und untere Öffnung aufweisen, wie sie oben beschrieben ist. Von dem Auslass-Sammelbehälter 15 führt eine mit einem Ventil 8 ausgestattete Rückführleitung 5 zu der Einlassseite der jeweiligen Pumpe 3, was zu einer Rezirkulation separierter Flüssigkeit von dem Sammelbehälter 15 zu der Eingangsseite der jeweiligen Multiphasenpumpe 3 führt. Auf diese Weise wird der minimal benötigte Flüssigkeitsanteil für die in der Regel Schraubenspindelpumpen 3 bereitgestellt, so dass auch bei hohen Gasaufkommen und einer lang andauernden ausschließlichen Förderung von der Gasphase sowohl ein ausreichender Druck aufgebaut als auch die Kompressionswärme abgeführt werden kann. Von dem Auslass-Sammelbehälter 15 führt ein Auslassstutzen 30 zu einer Weiterleitungs- oder Weiterverarbeitungseinrichtung.

## Patentansprüche

1. Sammelbehälter für Multiphasengemische aus einer Kohlenwasserstoffquelle mit zumindest einem Einlass (20) zum Einleiten von Multiphasengemischen in den Sammelbehälter (10,15) und mehreren Auslassstutzen (30), die an Pumpen (3) anschließbar sind, über die Multiphasengemische verpumpt werden, den Auslassstutzen (30) sind nach innen gerichtete, über den Sammelbehälterboden (11) nach oben überstehende Einbauten (40) zugeordnet, die eine erste obere Öffnung (42) und eine zweite untere Öffnung (41) aufweisen, wobei der Strömungsquerschnitt der unteren Öffnung (41) kleiner als der der oberen Öffnung (42) ist, **dadurch gekennzeichnet, dass** der unteren Öffnung (41) eine verstellbare Drossel- oder Schließeinrichtung zugeordnet ist.

2. Sammelbehälter nach Anspruch 1, **dadurch gekennzeichnet, dass** die Auslassstutzen (30) schräg nach unten oder senkrecht nach unten orientiert sind.

3. Sammelbehälter nach Anspruch 1 oder 2, **dadurch gekennzeichnet, dass** die Einbauten (40) verschieblich und/oder verdrehbar in dem Sammelbehälter (10, 15) gelagert sind.

4. Sammelbehälter nach einem der voranstehenden Ansprüche, **dadurch gekennzeichnet, dass** die Einbauten (40) als Einsätze, Rohrabschnitte, Schwallbleche oder Leitbleche ausgebildet sind.

5. Sammelbehälter nach einem der voranstehenden Ansprüche, **dadurch gekennzeichnet, dass** Verstelleinrichtungen (45) den Einbauten (40) zugeordnet sind, über die von außerhalb des Sammelbehälters (10, 15) der freie Strömungsquerschnitt der oberen und/oder unteren Öffnung (41, 42) in den Einbauten (40) veränderbar ist.

6. Sammelbehälter nach einem der voranstehenden Ansprüche, **dadurch gekennzeichnet, dass** Schließ- oder Dosiereinrichtungen (60, 70) an den Einbauten (40), Auslassstutzen (30) und/oder Auslassrohrleitungen angeordnet sind.

7. System aus zumindest einem Sammelbehälter (10, 15) nach einem der voranstehenden Ansprüche und mehreren daran angeschlossenen Multiphasenpumpen (3).

8. System nach Anspruch 7, **dadurch gekennzeichnet, dass** auf der Einlassseite zumindest eine Einlass-Multiphasenpumpe (3) angeordnet ist und von dem Sammelbehälter (15) eine Leitung (5) an die Einlassseite der Einlass-Multiphasenpumpe (3) führt.

9. System nach Anspruch 8 oder 9, **dadurch gekennzeichnet, dass** eine Steuereinrichtung vorgesehen ist, die mit an den Multiphasenpumpen (3) angeordneten Sensoren und Verstelleinrichtungen (45) gekoppelt ist und auf der Grundlage der Sensorwerte eine Verstellung des Strömungsquerschnittes zumindest einer Öffnung (41, 42) bewirkt.

10. Verfahren zum Separieren und Aufteilen eines Multiphasengemisches auf mehrere Multiphasenpumpen (3), bei dem das Multiphasengemisch in einen Sammelbehälter (10, 15) geleitet und mittels Separationseinrichtungen separiert wird, **dadurch gekennzeichnet, dass** die separierte Flüssigkeitsphase dosiert den einzelnen Multiphasenpumpen (3) zugeleitet wird.

11. Verfahren nach Anspruch 10, **dadurch gekennzeichnet, dass** das Multiphasengemisch in dem Sammelbehälter (10, 15) durch Verringerung der Strömungsgeschwindigkeit des einströmenden Multiphasengemisches separiert wird.

12. Verfahren nach Anspruch 10 oder 11, **dadurch gekennzeichnet, dass** die Menge der zugeleiteten Flüssigkeitsphase und/oder Gasphase in Abhängigkeit von Sensorparametern eingestellt wird.

13. Verfahren nach einem der Ansprüche 10 bis 12, **dadurch gekennzeichnet, dass** das Multiphasengemisch in einer Multiphasenpumpe separiert und von dem im Pumpengehäuse integrierten Sammelbehälter dosiert zu anderen Multiphasenpumpen geleitet wird.

14. Verfahren nach einem der Ansprüche 10 bis 13, , **dadurch gekennzeichnet, dass** abgetrennte Flüssigkeitsphase einer in Förderrichtung vor dem Sammelbehälter (10, 15) angeordneten Pumpe (3) auf der Einlassseite zugeleitet wird.

## Claims

1. Collecting tank for multi-phase mixtures from a hydrocarbon source with at least one inlet (20) for feeding multi-phase mixtures into the collecting tank (10, 15), and several outlet connections (30) that can be connected to pumps (3), by means of which the multi-phase mixtures are pumped off, the outlet connections (30) being associated with fittings (40), which are directed inward, protrude upward above the collecting tank bottom (11) and comprise a first upper opening (42) and a second lower opening (41), wherein the flow cross-section of the lower opening (41) is smaller than that of the upper opening (42), **characterized in that** the lower opening (41) is associated with a throttling or closing device.

2. Collecting tank according to claim 1, **characterized in that** the outlet connections (30) are oriented diagonally downward or vertically downward.

3. Collecting tank according to claim 1 or 2, **characterized in that** the internals (40) are mounted in the collecting tank (10, 15) in a movable and/or pivotable manner.

4. Collecting tank according to one of the preceding claims, **characterized in that** the internals (40) are designed as inserts, pipe sections, baffle plates or guide plates.

5. Collecting tank according to one of the preceding claims, **characterized in that** adjusting devices (45) are associated with the internals (40), by means of which the free flow cross-section of the upper and/or lower opening (41, 42) in the internals (40) can be adjusted from outside the collecting tank (10, 15).

6. Collecting tank according to one of the preceding claims, **characterized in that** the closing or metering devices (60, 70) are arranged on the internals (40), outlet connections (30) and/or outlet pipes.

7. System consisting of at least one collecting tank (10, 15) according to one of the preceding claims and several multi-phase pumps (3) connected thereto.

8. System according to claim 7, **characterized in that** at least one inlet multi-phase pump (3) is arranged on the inlet side and that a line (5) runs from the collecting tank (15) to the inlet side of the inlet multi-phase pump (3).

9. System according to claim 8 or 9, **characterized in that** a control device is provided that is connected to sensors and adjusting devices (45) arranged on the multi-phase pumps (3) and that causes an adjustment of the flow cross-section of at least one opening (41, 42) based on the sensor values.

10. Method for separating and distributing a multi-phase mixture to several multi-phase pumps (3), in which the multi-phase mixture is fed into a collecting tank (10, 15) and separated by means of separation devices, **characterized in that** the separated liquid phase is fed into the individual multi-phase pumps (3) in a metered manner.

11. Method according to claim 10, **characterized in that** the multi-phase mixture is separated in the collecting tank (10, 15) by reducing the flow velocity of the inflowing multi-phase mixture.

12. Method according to claim 10 or 11, **characterized in that** the volume of the liquid phase and/or gas phase fed in is adjusted depending on sensor parameters.

13. Method according to one of claims 10 to 12, **characterized in that** the multi-phase mixture is separated in a multi-phase pump and is led from the collecting tank that is integrated into the pump housing to other multi-phase pumps in a metered manner.

14. Method according to one of claims 10 to 13, **characterized in that** the separated liquid phase is led to a pump (3) that is arranged on the inlet side upstream of the collecting vessel (10, 15) in relation to the direction of flow.

## Revendications

1. Bac collecteur pour mélanges multiphasiques à partir d'une source d'hydrocarbures, comportant au moins une admission (20) pour l'introduction de mélanges multiphasiques dans le bac collecteur (10,15) et plusieurs tubulures d'évacuation (30) qui peuvent être raccordées à des pompes (3), par lesquelles les mélanges multiphasiques sont pompés, des chicanes (40) orientées vers l'intérieur et qui font saillie vers le haut au-dessus du fond du bac collecteur (11) sont agencées sur les tubulures d'évacuation (30), les chicanes comportent une première ouverture supérieure (42) et une deuxième ouverture inférieure (41), la section transversale de passage de l'ouverture inférieure (41) étant plus petite que celle de l'ouverture supérieure (42), **caractérisé en ce qu'**un dispositif d'étranglement ou de fermeture réglable est affecté à l'ouverture inférieure (41).

2. Bac collecteur selon la revendication 1, **caractérisé en ce que** les tubulures d'évacuation (30) sont orientées de manière oblique vers le bas ou verticalement vers le bas.

3. Bac collecteur selon la revendication 1 ou 2, **caractérisé en ce que** les chicanes (40) sont logées de manière à pouvoir coulisser et/ou tourner dans le bac collecteur (10, 15).

4. Bac collecteur selon l'une des revendications précédentes, **caractérisé en ce que** les chicanes (40) sont réalisées en tant que pièces d'insertion, tronçons de tuyauterie, déflecteurs ou tôles-guides.

5. Bac collecteur selon l'une des revendications précédentes, **caractérisé en ce que** des dispositifs de réglage (45) sont affectés aux chicanes (40), par lesquels la section transversale de passage libre de l'ouverture supérieure et/ou inférieure (41, 42) peut être modifiée dans les chicanes (40) depuis l'extérieur du bac collecteur (10, 15).

6. Bac collecteur selon l'une des revendications précédentes, **caractérisé en ce que** des dispositifs de fermeture ou de dosage (60, 70) sont installés sur les chicanes (40), tubulures d'évacuation (30) et/ou conduites d'évacuation.

7. Système constitué par au moins un bac collecteur (10, 15) selon l'une des revendications précédentes et par plusieurs pompes multiphases (3) qui y sont raccordées.

8. Système selon la revendication 7, **caractérisé en ce que** sur le côté d'admission est installée au moins une pompe multiphase d'admission (3) et une conduite (5) débouche du bac collecteur (15) vers le côté d'admission de la pompe multiphase d'admission (3).

9. Système selon la revendication 8 ou 9, **caractérisé en ce qu'**un dispositif de commande est prévu, qui est accouplé avec des dispositifs de réglage (45) et des capteurs qui sont installés sur les pompes multiphases (3) et qui provoque, sur la base des valeurs des capteurs, une modification de la section transversale de passage d'au moins une ouverture (41, 42).

10. Procédé conçu pour la séparation et la répartition d'un mélange multiphasique entre plusieurs pompes multiphases (3), selon lequel le mélange multiphasique est acheminé dans un bac collecteur (10, 15) et séparé par le biais de dispositifs de séparation, **caractérisé en ce que** la phase liquide séparée est fournie de manière dosée aux différentes pompes multiphases (3).

11. Procédé selon la revendication 10, **caractérisé en ce que** le mélange multiphasique est séparé dans le bac collecteur (10, 15) par la réduction de la vitesse d'écoulement du mélange multiphasique d'admission.

12. Procédé selon la revendication 10 ou 11, **caractérisé en ce que** la quantité de la phase liquide et/ou de la phase gazeuse fournie est réglée en fonction de paramètres des capteurs.

13. Procédé selon l'une des revendications 10 à 12, **caractérisé en ce que** le mélange multiphasique est séparé dans une pompe multiphases et acheminé de manière dosée par le bac collecteur intégré dans le carter de pompe vers d'autres pompes multiphases.

14. Procédé selon l'une des revendications 10 à 13, **caractérisé en ce que** la phase liquide séparée est conduite vers une pompe (3) installée dans la direction de l'écoulement en amont du bac collecteur (10, 15) sur le côté d'admission.
